# EUROPEAN PATENT APPLICATION

(11) **EP 4 779 926 A1**
(43) Date of publication of application: **22.07.2026**
(21) Application number: 25152120.9
(22) Date of filing: 15.01.2025
(51) Int. Cl.: H04L 9/00

(54) **PARALLELISED PRIVACY-PRESERVING COMPUTATION**

(71) Applicant: Roseman Group B.V., 4817 KW Breda (NL)
(72) Inventor: Veeningen, Meilof, Eindhoven (NL); Bouman, Niek Johannes, Wageningen (NL)
(74) Representative: Veeningen, Meilof Geert

(57) **Abstract**

The invention relates to a cryptographic system (010) for performing a privacy-preserving computation on a dataset comprising multiple rows. Multiple cryptographic devices perform the computation as a cryptographic secure multi-party computation. A cryptographic device has a memory for storing the dataset, and a processor subsystem comprising multiple cores. The processor subsystem applies an operation of the cryptographic secure multi-party computation to the dataset by distributing the dataset across the multiple cores by assigning respective subsets of rows to the respective cores, wherein the distribution is determined from the number of rows; and applying the operation of the cryptographic secure multi-party computation to the dataset in parallel comprising, at a respective core, applying the operation to the subset of rows assigned to the respective core.

## Description

### FIELD OF THE INVENTION

The invention relates to a cryptographic system for performing a privacy-preserving computation on secret data. The invention further relates to a cryptographic device for use in such a system; to a corresponding computer-implemented method; and to a computer-readable medium.

### BACKGROUND OF THE INVENTION

There is a growing demand for privacy enhancing technologies (PETs), i.e., data processing techniques that intrinsically protect the privacy of the data they operate on. For example, with the cryptographic technique of secure multi-party computation (MPC), multiple parties can perform a computation on their joint input using a distributed cryptographic protocol, such that each party learns nothing beyond the output of computation and his own (private) input.

One reason for the growing demand for PETs is that citizens are becoming increasingly dependent on the digital information stored about them by various companies and institutions. Because of this increasing dependence, the consequences of a breach of personal data are getting increasingly severe. And due to the worldwide surge of cybercrime and nation-state-sponsored cyber espionage, the risk of a data breach has increased sharply in recent years. Also, data-based collaborations between separate entities (like companies, hospitals, local governments) usually implies that personal data is copied between the entities, which poses the risk of uncontrolled spreading of data, in particular personal information. PETs can enable data collaboration between entities without the need for sharing the data in clear-text form. Another factor driving demand for PETs is the emergence of legal frameworks for data protection, such as the European GDPR and the Californian CCPA legislation, and their mandatory compliance. In the context of such frameworks, PETs are valuable as technical safeguards, and typically provide concrete instantiations of abstract legal notions.

Specifically, multi-party computation is a cryptographic technique in which a computation is performed in a distributed way between multiple cryptographic devices in such a way that the inputs, intermediate values, and/or outputs of the computation remain hidden from the parties performing the computation. Such values that remain hidden from the parties may be referred to as the secret values of the MPC. In general, a secret value of the M PC may have the property that a limited number of parties, up to a given threshold, does not know the secret value. However, a number of parties that exceeds the threshold may be able to derive the secret value.

A secret value can for example be a threshold encryption, of which the decryption key is distributed among the parties; or a secret sharing, also referred to herein simply as a sharing. A sharing may be defined as a distributed representation of a value into shares of the respective parties such that a limited number of the shares, up to the given threshold, does not allow to derive the represented value. Although the term "secret share" is most commonly used for M PC techniques using so-called arithmetic secret sharing, also other MPC techniques such as garbled circuits are considered herein to operate on secret shares. In multi-party computation, through the use of secret values and of various protocols that allow to perform operations on secret values, e.g., in secret-shared or threshold encrypted form, various computations can be performed, while keeping the underlying values hidden from the parties that perform them, thus providing privacy-preserving computation.

As the adoption of privacy-preserving technologies picks up, there is more and more demand for applying multi-party computation to large datasets. At the same time, modern computer architectures provide more and more facilities for parallel computation, e.g., executing tasks simultaneously on multiple cores of a processor. Therefore, it is desirable to design systems for performing multi-party computation that can optimally exploit such parallelism.

### SUMMARY OF THE INVENTION

It would be desirable to provide efficient techniques for performing secure multi-party computation using hardware parallelism.

In accordance with a first aspect of the invention, a cryptographic system for performing a privacy-preserving computation is provided, as defined by claim 1. In accordance with further aspects of the invention, a cryptographic device for use in such a system; and a cryptographic method of performing such a privacy-preserving computation are provided, as defined by claims 13 and 14, respectively. In accordance with an aspect of the invention, a computer-readable medium is provided, as defined by claim 15.

Various embodiments relate to performing a privacy-preserving computation. The privacy-preserving computation may be carried out by multiple cryptographic devices as a cryptographic secure multi-party computation (MPC) between the multiple cryptographic devices. The privacy-preserving computation may comprise applying an operation to a dataset comprising multiple rows. For example, the dataset may be a secret input of the multi-party computation; or may be an output of a previous operation of the multi-party computation; or the dataset may be a public input of the multi-party computation to which an operation is applied that involves secret parameters. The dataset may comprise multiple rows. A row may represent a record comprising zero or more secret and/or zero or more public values of the multi-party computation.

Interestingly, in order to apply the operation to the dataset under multi-party computation, one or more of the cryptographic devices may use parallelism. A cryptographic device may comprise a processor subsystem that comprises multiple cores, for example, a multi-core processor. The operation on the dataset may be distributed among the multiple cores, meaning the operation may be applied at respective cores of the processor subsystem to the subset of rows assigned to that respective core.

In order to determine which rows of the dataset to process at which core of the processor subsystem, the processor subsystem may be configured to distribute the dataset across the multiple cores by assigning respective subsets of rows to the respective cores. Interestingly, the inventors envisaged to determine the distribution, in other words the assignment of respective subsets of rows to the different cores, from the number of rows. For example, the distribution may not be based on an any dataset-specific data apart from the number of rows, such as the size of an individual record, the type of data in the dataset, or the current amount of memory available at respective cores. The distribution can be based on one or more parameters that remain fixed throughout the multi-party computation, such as a number of cores across which to distribute the operation and/or a DMA block size for allowing DMA, as discussed elsewhere. For example, the distribution may be based only on the number of rows and one or more dataset-independent parameters. Preferably, the respective cryptographic devices may determine the distribution across cores without communication among the cryptographic devices, e.g., based only on information that is already available, thus saving in amount of communication and in latency.

Determining the distribution from the number of rows has a number of advantages in the setting of multi-party computation. Some of these advantages derive from the fact that a multi-party computation typically proceeds in rounds where the different parties of the multi-party computation communicate with each other, and where the different parties of the multi-party computation thereby effectively perform respective parts of the same multi-party computation in a way that is synchronized among the parties. For example, to perform a multiplication of two secret values, respective parties may exchange respective secret-shared values with each other. If two multiplications are performed sequentially, then, because the parties may communicate for the the respective multiplications, performing the multiplications may effectively be synchronized between the cryptographic devices.

For addition of two secret values, no communication however may be needed. It is known to use concurrency to perform multiple parts of the same multi-party computation concurrently. In such a case, communication between the cryptographic devices may be based on a program counter. When exchanging messages, in order to keep track of which message belongs to which part of the multi-party computation, a program counter may be attached to a message, wherein the program counter identifies the part of the multi-party computation to which the message relates. Such a program counter is known for example from the software package "mpyc", available at https://github.com/ischoe/mpyc; and from N. J. van Gils, "Multiparty Computation in Haskell: From MPyC to hMPC" (master's thesis), Eindhoven University of Technology, 2024.

In order to perform the multi-party computation in parallel, it is advantageous if the respective devices that carry out the multi-party computation, determine the distribution across cores in the same way. For example, the different devices may use the same number of cores to apply the operation, in which case the different device may also use the same distribution of rows across cores. However, it is also possible for example that a first device uses half the number of cores as a second device, wherein one core of the first device acts on the same rows as two cores of the second device. In any case, if the parties determine a distribution across cores for a given cryptographic device in the same way, then, when exchanging a message of the multi-party computation that relates to one or more rows of the dataset, the parties can identify these one or more rows based on the distribution across cores. For example, when using a program counter, the parties may evolve the program counter based on the distribution of rows to cores, and thereby use the program counter to consistently refer to the same records of the dataset.

For example, the distribution may be determined based on, or as a function of, the number of rows and zero or more dataset-independent parameters, e.g., a block size and/or a number of cores. By not using information such as the amount of memory available at respective cores, the size of an individual record, the type of data in the dataset, and/or the program counter, interestingly, a distribution may be determined that is the same for respective datasets that have the same size, e.g., regardless of the type or size of record, and regardless of at which point in the multi-party computation the dataset is created.

This is advantageous especially when applying an operation that involves multiple datasets, e.g., one or more inputs and/or one or more outputs. In such a case, the distribution may be determined such that the multiple datasets use the same distribution. This is advantageous especially for storage reasons. For example, when respective cores have respective associated memory, then the operation may be applied to a record at the core associated to the record's memory, which may be the same for the respective datasets. Thereby, cross-core memory access may be avoided, increasing efficiency and avoiding concurrent data access issues. As another example, if data is retrieved from or stored to persistent storage in blocks corresponding to the distribution of data across cores, then the operation may be applied to a number of records by accessing the corresponding blocks, for the different datasets.

Optionally, the distribution of rows across cores may be determined such that a core to which a largest subset of rows is assigned, depends on the number of rows. There may be multiple cores to which the same number of rows is assigned; but at least the distribution may be determined such that there is no single core that is always among the cores to which the largest number of rows is assigned. For example, instead of assigning rows or blocks of rows to cores starting from the first core, a starting core to which most rows or blocks are assigned may be determined from the number of rows, for example in a pseudo-random way. This way, if multiple datasets with different numbers of rows are stored in memory and/or processed at respective cores, a more even distribution of storage and/or processing can be achieved. Still, interestingly, the property that multiple datasets with the same number of rows are distributes across cores in the same way, may be maintained.

Optionally, the memory of the cryptographic device may be divided into multiple respective memory parts for the respective cores. A memory part may be bound to a specific core. For example, memory allocation for the memory part may be controlled at the core. For example, a shared-nothing architecture may be used. At least cross-core memory writes may be avoided. Cross-core memory reads may be avoided as well, or may be slower than reads into the memory for the core itself. The dataset may be distributed among the multiple cores by allocating respective memory for the respective subsets in the respective memory parts. For example, the allocation in the respective memory parts may be performed at the respective cores. The distribution of the dataset can happen as part of applying the operation, but can also happen earlier, e.g., the dataset may be stored in memory prior to an instruction being received, e.g., by a client, to carry out the operation.

Optionally, the memory of the cryptographic device may comprise multiple respective Non-Uniform Memory Access (NUMA) domains for multiple respective sets of one or more cores. Generally, NUMA refers to an architecture in which a processor may access memory from its NUMA domain, e.g., local memory, faster than memory from a different NUMA domain, e.g., non-local memory. The memory part for a core may be part of the NUMA domain for that core. By applying operations at a core to rows of the dataset that are stored in the NUMA domain for that core, the NUMA architecture may be effectively exploited to efficiently implement the multi-party computation. Preferably, the distribution of rows across cores may be determined such that, at all cryptographic devices participating in the multi-party computation, the core-local NUMA domain is used. By using a distribution of rows across cores as described herein, for example in combination with a program counter, it may be ensured that the different devices can use core-local memory and still refer consistently to the same sets of rows across multiple concurrent and/or parallel operations.

Optionally, the respective memory for a respective subset at a respective core may be allocated by allocating multiple respective chunks of contiguous memory in the respective memory part. A chunk may be of size equal to at most a given chunk size. For example, for the memory at a respective core, the std::deque data structure of C++ may be used. Chunking has the advantage of avoiding large allocations, which may make inefficient use of memory and/or can cause slow allocations, for example due to memory fragmentation. The chunk sizes may be the same across the multiple cryptographic devices, but this is not needed.

Optionally, the respective memory for a respective subset may be allocated for use with Direct Memory Access (DMA). Using DMA, the dataset may be accessed from the memory by other subsystems of the cryptographic device, such as the a persistent storage data interface or a communication interface, independently of the processor subsystem. For example, the dataset may be written to and/or read from disk using DMA. The use of DMA may pose restrictions on the memory alignment of blocks that can be read or written, in particular on a memory alignment of the starting address of a DMA read of write, and on a read and/or write file alignment, and thereby on the number of bytes that are written or read. The allocated memory may be aligned such that a set of consecutive rows of the subset of rows can be read or written using DMA.

When using DMA, also assignment of rows to cores may be based on a DMA block size to ensure that the total amount of bytes represented by the rows complies with the DMA read and/or write file alignment. Rows may be assigned to cores in blocks with a number of rows equal to the DMA block size. The DMA block sizes used by the different cryptographic devices may be the same, in order to arrive at the same distribution of data across cores. The dataset may be read from disk to memory using DMA and/or written from memory to disk using DMA. At least reading into a part of memory from disk, but preferably also writing from memory to disk, may preferably be performed at the core associated to that part of memory.

Memory allocation for DMA can be combined with memory allocation in chunks, by ensuring that the allocated chunks satisfy the memory alignment and read and/or write file alignment restrictions.

Despite the DMA constraints, interestingly, the distribution of data across cores may be determined in the same way by the multiple cryptographic devices, e.g., by using a common value for the DMA block size.

Optionally, the memory may be allocated for use with DMA upon determining that the number of rows exceeds a threshold value. For example, if the number of rows is relatively small, then a number of rows may be assigned to a core where the corresponding data does not comply with DMA alignment restrictions. If the number of rows is small, by not complying with DMA alignment restrictions, a relatively uniform distribution of data across cores may be achieved so that operations on the dataset can be optimally distributed across cores, which is especially important if an operation is computationally expensive already for a small number of rows. On the other hand, for a small number of rows, the performance penalty of not being able to use DMA may be small. On the other hand, if the number of rows is sufficiently large, then despite using DMA alignment, still a relatively uniform distribution of data across cores may be achieved while also allowing efficient reading/writing using DMA.

Interestingly, the operation may be applied to the respective subsets of the dataset at the respective cores relatively independently from the other cores. In particular, as part of applying the operation at a core, a cryptographic device may send a message of the cryptographic secure multi-party computation to another cryptographic device independently of messages sent at other cores as part of applying the operation. For example, the sending of the message may be initiated autonomously at a core, e.g., without a trigger from another core. In particular, the operation may be applied in multiple rounds of the cryptographic secure multi-party computation. The multiple rounds may be unsynchronized across the multiple cores. This way, the available resources at the respective cores may be used optimally without the need to wait for other cores. Synchronization may happen however to check whether the operation has finished at the respective cores.

Optionally, a row of the dataset may be represented by multiple elementary values. For example, an elementary value may be a secret-share of the multi-party computation, or the like. Storage of the dataset may in such a case be implemented by using a data structure for storing the elementary values, such as a vector or a deque. This has the advantage, for example, that a fixed container type, e.g., a deque of secret shares, can be used despite the number of elementary values per row differing between datasets. In such cases, interestingly, the distribution across cores may still be determined not based on the number of elements in the container but based on the number of rows, e.g., regardless of the number of elementary values per row. This way, in particular, for different datasets storing different types of data and/or data with a different number of elementary values per row, the same distribution of rows across cores may be used; while still being able to use a container for the elementary data type internally.

Optionally, the distribution of the dataset across the cores may be determined by determining a starting core based on the number of rows; determining a maximum number of rows per core based on the number of rows; and assigning respective subsets of rows to respective cores according to the starting core and according to the maximum number of rows per core. For example, the starting core may be determined as a function of the number of rows and the number of cores, e.g., by a pseudo-random function. The maximum number of rows per core may be determined based on the number of rows and based on one or more dataset-independent parameters, such as the number of cores and a block size. For example, the maximum number of rows per core may be determined by evenly distributing blocks of one or more rows across the cores. The subsets of rows may be assigned to the cores based on this distribution, e.g., by assigning the largest subsets of rows to the initial core and zero or more subsequent cores, and assigning one less row or block to the remaining cores. Having determined a number of rows per core, the rows may be assigned to the cores, e.g., starting at the first core or at the determined initial core.

It will be appreciated by those skilled in the art that two or more of the above-mentioned embodiments, implementations, and/or optional aspects of the invention may be combined in any way deemed useful. Modifications and variations of any system and/or any computer readable medium, which correspond to the described modifications and variations of a corresponding computer-implemented method, can be carried out by a person skilled in the art on the basis of the present description, and the other way round as well.

### BRIEF DESCRIPTION OF THE DRAWINGS

These and other aspects of the invention will be apparent from and elucidated further with reference to the embodiments described by way of example in the following description and with reference to the accompanying drawings, in which:
Fig. 1 shows a cryptographic device;
Fig. 2 shows a cryptographic system;
Fig. 3 shows a detailed example of privacy-preserving computation on a dataset;
Fig. 4 shows a detailed example of privacy-preserving computation on a dataset;
Fig. 5 shows a computer-implemented method;
Fig. 6 shows a computer-readable medium comprising data.

It should be noted that the figures are purely diagrammatic and not drawn to scale. In the figures, elements which correspond to elements already described may have the same reference numerals.

### DETAILED DESCRIPTION OF EMBODIMENTS

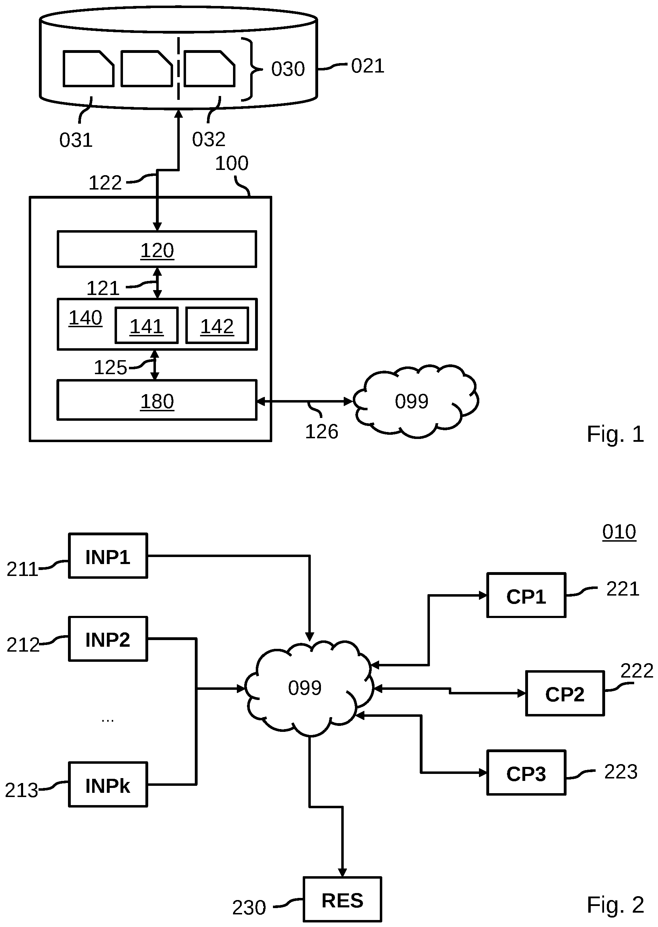

**Fig. 1** shows a cryptographic device 100 for use in a cryptographic system as described herein, e.g., in Fig. 2. The cryptographic system may be for performing a privacy-preserving computation on a dataset comprising multiple rows. The computation may be performed as a cryptographic secure multi-party computation between multiple cryptographic devices, including device 100.

The device 100 may comprise a processor subsystem 140. The processor subsystem 140 may comprise a multi-core processor. The multi-core processor may comprise multiple cores. For illustrative purposes, the figure shows two cores 141, 142; but the number of cores can also be larger, for example, at least 8, at least 16, or at least 128. The processor subsystem 140 may be configured to perform operations on multiple cores 141-142 in parallel and/or at concurrently at a single core. For example, processor subsystem 140 may comprise one or more CPUs; a respective CPU may comprise one or more silicon dies; and a respective die may comprise one or more cores.

The device 100 may further comprise a memory interface 120 for accessing a dataset 030. The dataset 030 may comprise multiple rows, e.g., at least 1000 rows; at least 10000 rows; or at least 1000000 rows. A row of the dataset may comprise one or more secret values of the multi-party computation, e.g., represented as secret-shares, and/or one or more public values of the multi-party computation. For example, as also illustrated in Fig. 1, the input interface may be constituted by a memory interface 120 which may be configured to access the data 030 from a memory 021. The memory 021 may be a volatile memory, such as an internal memory. The memory 021 may be divided into multiple respective memory parts 031, 032 for the respective cores 141, 142. The processor subsystem 140 may be configured to distribute the dataset 030 by allocating respective memory for the respective subsets in the respective memory parts 031, 032.

In particular, the memory 021 may be configured for non-uniform memory access (NUMA). The memory parts 031, 032 may be comprised in respective NUMA domains local to multiple respective sets of one or more cores 141, 142. In particular, memory may be physically attached to respective silicon dies and/or CPUs associated to respective cores.

The processor subsystem 140 may be configured to distribute the dataset 030 across the multiple cores 141, 142 by assigning respective subsets of rows to the respective cores 141, 142. The distribution may be determined from the number of rows of the dataset 030. The processor subsystem 140 may be further configured to apply an operation of the cryptographic secure multi-party computation to the dataset 030 in parallel by, at a respective core 141, 142, applying the operation to the subset of rows 031, 032 assigned to the respective core 141, 142.

As also discussed with respect to Fig. 2, the device 100 may be further configured to provide inputs to the multi-party computation, e.g., to input one or more records of the input dataset, e.g. by secret-sharing, encrypting, or otherwise masking them. The inputs may be obtained via an input interface of the system, such as an interface to a keyboard, mouse or similar, or an internal input interface (not shown). Instead or in addition, the device 100 may be further configured to obtain outputs from the multi-party computation, e.g., to obtain one or more or rows resulting from applying the operation to the dataset, or to obtain a multi-party computation result based on applying the operation to the dataset. The outputs may be output via an output interface, e.g., an interface to a screen or similar, or an internal output interface.

The device 100 may also comprise a communication interface 180 configured for communication 126 with at least one further cryptographic device of the cryptographic system. Communication interface 180 may internally communicate with processor subsystem 140 via data communication 125. Communication interface 180 may be arranged for direct communication with the other devices, e.g., using USB, IEEE 1394, or similar interfaces. As illustrated in the figure, communication interface 180 may also communicate over a computer network 099, for example, a wireless personal area network, an internet, an intranet, a LAN, a WLAN, etc. For instance, communication interface 180 may comprise a connector, e.g., a wireless connector, an Ethernet connector, a Wi-Fi, 4G or 4G antenna, a ZigBee chip, etc., as appropriate for the computer network. Communication interface 180 may be an internal communication interface, e.g., a bus, an API, a storage interface, etc. The communication interface may optionally directly communicate with the memory interface 120 for reading data from memory 021 to the network 099, or for writing data to memory 021 from the network 099, via direct memory access (DMA).

Communication 126 can be via a communication channel dedicated to the respective core. For example, communication 126 with a further cryptographic device can be performed via respective network connections with the further cryptographic device for the respective cores 141, 142. This has the advantage that messages can be exchanged completely independently from each other by the different cores, thereby reducing the amount of waiting and between-core communication. However, it is also possible to re-use a single network connection with the further cryptographic device across cores.

The device 100 may further comprise a data interface (not shown). The data interface may be for inputting the input dataset 030 and/or outputting a dataset resulting from applying the operation 030 to the dataset. For example, the input interface may be constituted by a data storage interface configured to access the data from a data storage. For example, the data storage interface may be a memory interface or a persistent storage interface, e.g., a hard disk or an SSD interface, but also a personal, local or wide area network interface such as a Bluetooth, ZigBee or Wi-Fi interface or an Ethernet or fibreoptic interface. The data storage may be an internal data storage of the system 100, such as a hard drive or SSD, but also an external data storage, e.g., a network-accessible data storage. In some embodiments, respective data may each be accessed from or distributed across different data storages, e.g., via a different subsystem of the data storage interface. Each subsystem may be of a type as is described above for the data storage interface. The data interface may optionally directly communicate with the memory interface 120 for reading data from memory 021, e.g., to storage, or writing data to memory 021, e.g., from storage, via Direct Memory Access (DMA).

When using DMA, processor subsystem 140 may be configured to allocate memory for a dataset in the respective memory parts 031, 032 for use with DMA, e.g., by ensuring that an allocated memory region, e.g., a chunk of contiguous memory, complies with DMA alignment restrictions such as DMA memory alignment and DMA read and/or write alignment. For example, DMA memory alignment may restrict DMA reads and writes to start at a memory address with a given alignment, e.g., at 512 bytes. DMA read alignment and/or DMA write alignment may restrict DMA reads and writes to start and end at file offsets with a given alignment, e.g., 4096 bytes, and may thereby restrict the number of bytes that can be read and written using DMA.

In general, each device described in this specification, including but not limited to the system 100 of Fig. 1, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers.

**Fig. 2** shows a cryptographic system 010 for performing a privacy-preserving computation as a cryptographic secure multi-party computation. The computation may comprise an operation being applied to a dataset of multiple rows, as described elsewhere. The cryptographic system 010 may in general comprise multiple input devices, multiple different cryptographic devices, and at least one result device, where the sets of input, cryptographic, and result devices may overlap with each other. As illustrated, the devices typically communicate over a computer network 099, e.g., the internet or a local network.

In particular, shown in the figure are three cryptographic devices **CP1**, 221; **CP2**, 222; and **CP3**, 223. The cryptographic devices may be based on cryptographic device 100 of Fig. 1. The number of cryptographic devices that is used can vary depending on the particular technique used for the multi-party computation and the security properties which are desired. For example, the number of cryptographic devices **CPi** can be 2, 3, or more.

The cryptographic devices **CPi** may be configured to perform a secure multi-party computation (also known per se as multi-party computation, secure computation, or MPC). Generally, a multi-party computation may be a distributed protocol between the cryptographic devices for performing a computation in a privacy-preserving way. Depending on the specific technique used, MPC may ensure privacy and/or correctness of the computation against an attacker that eavesdrops or controls one or more (but typically not all) of the cryptographic devices. As known per se, any computation can be performed as a multi-party computation (in other words, "under the multi-party computation"), but concrete computational and communication efficiency can in general greatly depend on how exactly the computation is performed.

In particular, the multi-party computation can be performed based on one of the following techniques:
- based on secret sharing, in particular arithmetic secret sharing such as Shamir secret sharing, replicated secret sharing, or additive secret sharing. For example, the multi-party computation can be based on the techniques described in Shamir, "How to Share a Secret", Communications ACM, 1979; Ben-Or, Goldwasser, Wigderson, "Completeness Theorems for Non-Cryptographic Fault-Tolerant Distributed Computation (Extended Abstract)", Proceedings of the 20th Annual ACM Symposium on Theory of Computing, 1988; Chaum, Crepeau, Damgaard, "Multiparty Unconditionally Secure Protocols (Extended Abstract)", Proceedings of the 20th Annual ACM Symposium on Theory of Computing, 1988; Ito, Saito, Nishizeki, "Secret sharing scheme realizing general access structure", Electronics and Communications in Japan (Part III: Fundamental Electronic Science), 1989; Damgaard, Pastro, Smart, Zakarias, "Multiparty Computation from Somewhat Homomorphic Encryption", proceedings CRYPTO 2012;
- based on garbled circuits, e.g., see Yao, "Protocols for Secure Computations (Extended Abstract)", 23rd Annual Symposium on Foundations of Computer Science, Chicago, 1982;
- based on oblivious transfer, e.g., see Goldreich, Micali, Wigderson, "How to Play any Mental Game or A Completeness Theorem for Protocols with Honest Majority", Proceedings of the 19th Annual ACM Symposium on Theory of Computing, 1987;
- based on threshold homomorphic encryption, e.g., see Cramer, Damgaard, Nielsen, "Multiparty Computation from Threshold Homomorphic Encryption", proceedings EUROCRYPT 2001;
- based on any combination of the above, e.g., see Demmler, Schneider, Zohner, "ABY - A Framework for Efficient Mixed-Protocol Secure Two-Party Computation", proceedings NDSS 2015.

Various higher-level operations such as sorting and integer comparison can be performed based on such basic multi-party computation protocols as discussed e.g. in M. Keller, "MP-SPDZ: A Versatile Framework for Multi-Party Computation", proceedings ACM CCS 2020; or as implemented in MPyC, see https://github.com/ischoe/mpyc.

The multi-party computation may be configured to perform operations on so called sharings, or secret shares, of values. A secret share may be a distributed representation of an input, intermediate, or output value of the MPC. A limited number of shares, up to a certain threshold t, may not allow to derive the represented value. The threshold may be configurable, with different techniques supporting different possible threshold. For example, the multi-party computation may be an honest majority MPC, where the threshold t is strictly smaller than half the number of parties *n*, e.g., 1/2 (*n*-1). Or, the multi-party computation can be a full-threshold MPC, where the threshold can be higher, e.g., *n*-1. Examples of sharings are arithmetic sharing, such as Shamir secret sharing or replicated secret sharing; XOR sharing; or Yao sharing. It is stressed that the term secret sharing in this specification also includes Yao sharings, e.g., secret values of an MPC computation performed using garbled circuits, as also done in "ABY - A Framework for Efficient Mixed-Protocol Secure Two-Party Computation".

A value that is computed on by the M PC but that is represented among the parties in such a way that no single party, more generally no unqualified set of parties, can derive the value from that representation, is referred to as a secret value, or private value, of the M PC. A secret value can be a secret sharing, but it is also possible e.g. to use a threshold encryption. For example, a secret value can be a secret input, a secret output, or a secret intermediate value. Here, a secret input may be known in the plain by the party inputting it, and known only in a secret representation by the cryptographic devices **CPi**; and similarly, a secret output may be learned in the plain by the party receiving it as output, but may be known only in a secret representation by the cryptographic devices **CPi**. A private intermediate value may be known only to the cryptographic devices **CPi**, and only as a secret representation. By processing values using secret representations, the data can be kept secret, at least as long as the underlying assumptions of the multi-party computations (e.g., a number and/or type of corruptions of the cryptographic devices) are satisfied.

Also shown in the figure are a number of input devices **INP1**, 211; **INP2**, 212; up to **INPk**, 213. The input devices may input respective input data for the multi-party computation. The input devices 211-213 may use the hardware configuration discussed in Fig. 1. The number of input devices can be two, at most or at least three, or at most or at least five, for example. In many cases, the sets of inputs devices **INPi** and cryptographic devices **CPi** may wholly or partially overlap. For example, the set of input devices may be a subset or a superset of the set of cryptographic devices, or may be exactly the same.

Further shown is a result device **RES**, 230. The result device **RES** may obtain a result of the MPC based on the performed privacy-preserving computation. It is also possible for multiple respective result devices to obtain multiple respective results of the multi-party computation. Although illustrated as a separate device in the figure, the result device(s) **RES** can be the same devices as an input device **INPi** and/or cryptographic device **CPi**. Generally, the result device may be implemented using the hardware configuration discussed w.r.t. Fig. 1.

Many known multi-party computation techniques are defined per se for the case where the input and result devices **INPi** and **RES** form a subset of the set of cryptographic devices **CPi** that perform the MPC. To use such techniques in a setting where an input and/or result device does not perform the M PC itself, an input device can for example determine a secret representation, e.g., a secret sharing, and distribute it among the computation devices. Similarly, a result device can for example receive a secret representation, e.g., respective secret shares, of an output from the computation devices and derive the output from the secret representation. It is also possible to use specific techniques for letting an external party provide inputs to and/or obtain outputs from a multi-party computation. For example, the techniques from the following reference can be used: T. P. Jakobsen, J. B. Nielsen, and C. Orlandi. "A framework for outsourcing of secure computation", proceedings CCSW14.

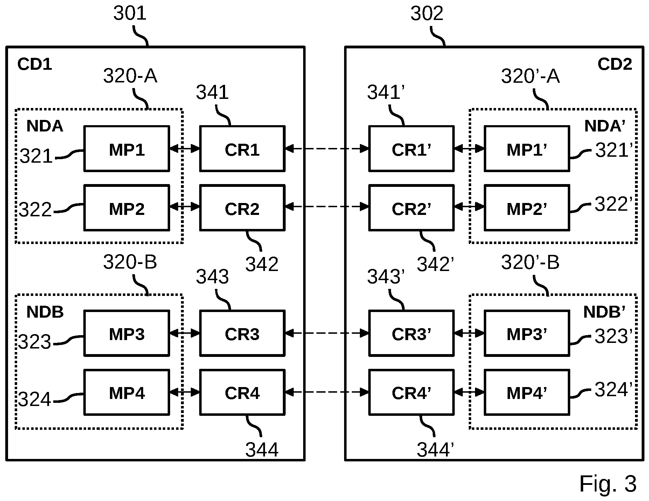

**Fig. 3** shows a detailed, yet non-limiting, example of performing a privacy-preserving computation on a dataset.

For illustrative purposes, two cryptographic devices **CD1**, 301 and **CD2**, 302, are shown. Cryptographic device **CD1** in this example has four cores **CR1**, 341; **CR2**, 342; **CR3**, 343; and **CR4**; 344. In this example, the memory of cryptographic device **CD1** is divided into multiple respective memory parts **MP1**, 321; **MP2**, 322; **MP3**, 323; **MP4**, 324, corresponding to the respective cores **CRi**. As shown in the figure. For example, memory allocation in memory party **MPi** may be controlled by core **CRi**. Device **CD1** may employ a shared-nothing architecture. For example, at least writing to memory **MPi** of a different core **CRj**, and in most cases reading from memory **MPi** of a different core **CRj**, may be avoided except via a dedicated message passing functionality.

In particular, as shown, the cryptographic device **CD1** in this figure may employ a NUMA architecture, in this example with a NUMA domain **NDA**, 320-A, that is local to cores 341, 342; and a NUMA domain **NDB**, 320-B, that is local to cores 343, 344.

The setup of the second cryptographic device **CD2** shown in this figure is similar to that of the first cryptographic device **CD1**; with four cores **CR1'**, 341; **CR2'**, 342; **CR3'**, 343; and **CR4'**, 344 with corresponding memory parts **MP1'**, 321; **MP2'**, 322; **MP3'**, 323'; and **MP4'**, 324' divided over NUMA domains **NDA'**, 320'-A, **NDB'**, 320'-B. In general, however, it is not needed for the second cryptographic device to have the same number of cores and/or NUMA domains.

To apply an operation of a cryptographic secure multi-party computation on a dataset, the dataset may be distributed across the multiple cores **CRi**, **CRi'**. The assignment of rows to cores may be determined from the number of rows of the dataset, for example, using the number of cores (in this example, 4) as a parameter. For example, the dataset may be distributed in blocks of a given number of rows, with a block size being used as an additional parameter. The block size being selected for use with DMA. The block size may be chosen based on DMA restrictions, regardless of the size of a row. For example, with DMA reads and writes restricted to 4096-byte file boundaries, the block size may be selected as 512 rows, such that for any row whose size is a multiple of 8 bytes, e.g., any row consisting of a number of elementary values of 8 bytes or a multiple of 8 bytes, the block size times the size of a row matches the DMA read/write restrictions.

The dataset may be distributed by allocating respective memory for the respective subsets of the dataset in the respective memory parts **MPi**. The memory may be allocated in respective chunks of contiguous memory of size at most equal to a chunk size, e.g., using a C++ deque or similar. The chunk size can be a multiple of the DMA block size times the size of a row, or at least a multiple of the DMA block size times the size of an elementary item in a row. For example, the allocation chunk size can be at most or at least 64 kB, at most or at least 128 kB, or at most or at least 256 kB.

The operation of the cryptographic secure multi-party computation (MPC) may be applied to the dataset in parallel by, at a respective core **CRi**, applying the operation to the subset of rows that is assigned to the respective core and stored in memory part **MPi**. Generally, performing the MPC operation may involve communication between the cryptographic devices **CD1**, **CD2**. Preferably, the subset of rows on which device **CD1** acts, corresponds to a subset of rows that is also assigned to a respective core at the other cryptographic device **CD2**. In particular, a respective core **CRi** at the first cryptographic device may communicate directly with the corresponding core **CRi'** at the second cryptographic device, for example, using a per-core network connection. For example, no synchronization across cores **CRi** may be performed for the multiple rounds that typically make up the applying of the operation.

At a core **CRi**, the operation may be applied by applying the operation concurrently to multiple respective chunks of one or more rows of the subset of rows, thus combining cross-core parallelism with on-core concurrency. This chunk size may correspond to the DMA block size and/or the allocation chunk size, but this is not needed; e.g., the concurrency chunk size may be based on the memory and/or computational resource costs of the operation to be applied.

Generally, the operation of the cryptographic secure multi-party computation may be applied to one or more datasets in-place, but the operation may also have as output one or more newly created datasets. Moreover, it is possible to apply a first operation of the cryptographic secure multi-party computation to obtain as output a first dataset distributed across the multiple cores; and to apply a second operation of the cryptographic secure multi-party computation to the first dataset to obtain a second dataset. In such a case, the first and second datasets may be distributed across the multiple cores **CRi** according to the same distribution, so the operation can be applied at core **CRi** in its own memory portion **MPi**.

Communication can be performed, for example, via a communication channel such as a network socket that is dedicated to the respective core, as illustrated by the dashed lines in the figure. For example, at a core **CRi**, a dispatch mechanism may be used in which the core **CRi** may receive a message of the cryptographic secure multi-party computation, for example via the dedicated communication channel; extract a message identifier from the message; and dispatch the message to a concurrent task at the respective core **CRi** based on the message identifier. For example, the message identifier can be based on a program counter as also discussed elsewhere in this specification. Interestingly, by using a row-to-core assignment as described, and using it across the cryptographic devices, it can be ensured that the different cryptographic devices **CDi** have consistent program counters without the need to, as part of performing the operation, communicate particular information about which rows of the dataset a current operation relates to.

A one-to-one mapping between the cores of the cryptographic devices is not strictly needed. E.g., a first device can have twice as many cores as a second device with each core of the second device operating on the same rows as two cores of the first device, etcetera. Regardless, however, the cryptographic devices may be able to determine the way that rows are distributed across cores, locally and/or at other devices, without communication between the cryptographic devices, e.g. because the distribution is just based on the number of rows and on dataset-independent parameters.

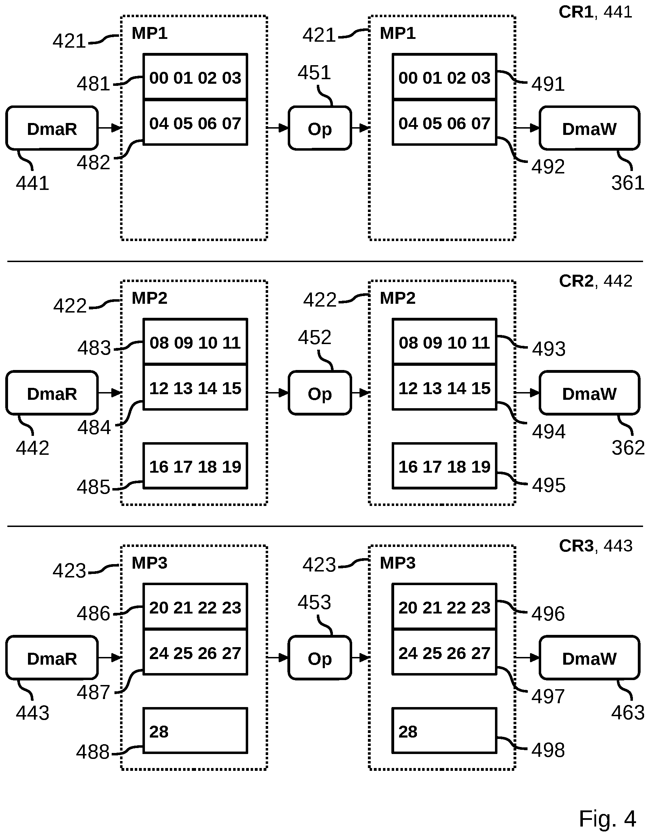

**Fig. 4** shows a detailed, yet non-limiting, example of performing a privacy-preserving computation on a dataset. This example is based on the example of Fig. 3, and the different options mentioned there, also apply in this case. In particular, this example shows a single cryptographic device, e.g. device **CD1** or **CD2** of Fig. 3.

In particular, by way of illustration, the device is illustrated as having three cores **CR1**, 441; **CR2**, 442; and **CR3**; 443. The memory of the cryptographic device may be divided into respective memory parts **MP1**, 421; **MP2**, 422; and **MP3**, 423, that are bound to the respective cores **CRi**; for example, the respective cores **CRi** may be responsible for managing and allocating memory in the respective memory parts **MPi**. Also, the memory parts may be comprised in respective NUMA domains (not shown in this figure) for the respective cores.

This figure shows an example of how a dataset may be distributed across the multiple cores **CRi** by assigning respective subsets of rows to the respective cores **CRi**. A dataset may be distributed by allocating respective memory for the respective subsets in the respective memory parts **MPi**. For example, the allocation of a memory part **MPi** may be performed by an allocator running at the corresponding core **CRi**.

In this example, the distribution is determined from the number of rows of the dataset, using the number of cores and a block size as dataset-independent parameters, but not using any further information about the dataset such as the size or type of dataset rows, or the number of elementary values that a dataset row comprises. In this figure, an operation is applied to to an input dataset 481-488, having by way of illustration 29 rows numbered 0, 1, ..., 28; resulting in an output dataset 491-498, also having 29 rows numbered 0, 1, ..., 28. The rows of the input and output datasets may be distributed across cores in the same way.

In particular, in this figure, the distribution is determined by assigning rows to cores in blocks. In particular, blocks 481-482 and 491-492; 483-485 and 493-495; 486-488 and 496-498 are assigned to the memory parts 421; 422; 423 of the respective cores 441; 442; 443, using a block size of 4 rows per block.

In particular, as also discussed elsewhere, the block size may be selected for use with DMA, e.g., to ensure that reading or writing a respective block can be done while complying with DMA alignment restrictions. For example, the block size may be selected such that, for any supported type of row data, the size of the data representing the block may comply with DMA read and/or write restrictions, e.g., may be a multiple of 4096 bytes. For example, a block size of 4096 rows may for example be used to support row data with any byte size while a block size of 512 may for example be used to support row data with a byte size that is a multiple of 4096/512=8 bytes.

DMA alignment restrictions may also be taken into account while allocating the memory. For example, the alignment of memory may be such that blocks 481-488, 491-498 start at a memory address complying with a DMA memory alignment restriction, e.g., at 512-byte boundaries.

In particular, in this example, a dataset of 29 rows may be distributed across 3 cores, with a block size of 4 rows per block. In this example, the distribution of data across cores may be determined based on the number of rows and on dataset-independent parameters: the number of cores and the number of rows per block. The data may be distributed such that the one or more cores to which a largest subset of rows are assigned, depend on the number of rows. For example, there may be no single core that is always in the set of largest-subset cores for all numbers of rows.

Based on the number of rows and on the dataset-independent parameters, a maximum number of rows per core may be determined. For example, the maximum number of rows may be computed by computing a number of blocks based on the number of rows; a maximum number of blocks per core based on the number of blocks; and a maximum number of rows per core based on the maximum number of blocks per core. For example, in this figure, the number of blocks may be ceil(29/4)=8; the maximum number of blocks per core may be ceil(8/3)=3; and the maximum number of rows per core may be 3*8=12.

To ensure that the largest number of rows does not always end up at the same core, a starting core may be determined based on the number of rows. The starting core may be one of the cores to which a largest number of rows is assigned. In this example, core **CR2** may be determined to be the starting core. The starting core may be determined as a function of the number of rows, and optionally also the other parameters. For example, the core may be determined by taking the number of blocks modulo the number of cores; or, to increase the randomness of the initial cores and thereby achieve a more even distribution for multiple datasets, a pseudo-random function can be used, such as the function (a*N + b mod P) mod C, where C is the number of cores; P is a number, for example a prime number such as 37; and a and b are fixed coefficients.

Respective subsets of rows may be assigned to respective cores according to the maximum number of rows per core (in this example, 12) and the starting core (in this example, core 2). For example, starting the assignment from core **CR2**, rows 0-11 may be assigned, in three chunks, to core **CR2**; rows 12-23 may be assigned, in three chunks, to core **CR3**; and rows 24-28 may be assigned, in two chunks, to core **CR1**. It is noted that there are two cores **CR2**, **CR3** that have the maximum amount of chunks in this example; and that in general, which core or core(s) have the maximum amount of cores according to the described procedure, depends on the determined starting core.

As another example, it is also possible to use the number of chunks per core as computed above, but to start numbering the rows at the first core. For example, as in the previous example, the number of chunks per core may be 2 for core **CR1**; 3 for **CR2**; and 3 for **CR3**; now corresponding to assigning rows 0-7 to blocks 481-482 of core **CR1**; assigning rows 8-19 to blocks 483-485 of core **CR2**; and assigning rows 20-28 to blocks 486-488 of core **CR3**. Starting by assigning row 0 to the first core may facilitate a more efficient implementation since it is possible to loop over the rows by iterating over the cores in order.

The figure also illustrates allocating memory at a core in multiple chunks of contiguous memory, according to a given chunk size. A chunk can hold a number of rows that is larger than the DMA block size. For example, the chunk size can be at most or at least 64 kB, at most or at least 128 kB, or at most or at least 256 kB. A chunk may be allocated such that it complies with DMA alignment restrictions, e.g., such that the rows stored in a chunk may be read and/or written using DMA.

For example, in this illustrative example, the chunk size may correspond to two blocks of rows. For example, in memory portion **MP1**, blocks 481, 482 may together form a chunk. In memory portion **MP2**, blocks 483, 484 may form a chunk and block 485 may form another chunk, here allocated as a block of size smaller than the chunk size. In memory portion **MP3**, blocks 846, 487 may form a chunk, and block 488 may form another chunk. As shown in the figure, while the chunk for block 488 is allocated to be smaller than the chunk size, it is allocated to be larger than the size of the single element that it holds in order to ensure that the block 488 is DMA-readable and/or DMA-writeable.

To allocate memory for a number of rows, a number of chunks of size equal to the chunk size may be allocated, with the final chunk optionally being smaller. For example, the data can be stored in a known container that implements a chunked allocation strategy, such as C++'s deque or the chunked_vector from ScyllaDB. In general, allocating memory in chunks has the advantage of avoiding very large allocations that may be inefficient in terms of memory use and/or computationally expensive to perform.

In many cases, a row of the dataset may be represented by multiple elementary values, such as secret-shares of the multi-party computation. For example, the data type may be fixed but the number of elementary values per row may depend from dataset to dataset. In such a case, an underlying container for storing elementary values may be used. This allows to use a fixed-type container despite the size of a row being variable. Interestingly, however, also in such a case, the distribution across cores may happen per row, based on the number of rows, independently from the number of elementary values per row and regardless of the row being made up of elementary values. For example, the dataset may also in such a case be divided into blocks 481-488 according to a DMA block size, that is independent of the number of elementary values per row, with respective blocks being assigned to different cores.

The figure further shows operation **Op**, 451, 452, 453 of the cryptographic secure multi-party computation being applied to the dataset 481-488 in parallel by, at a respective core **CRi**, applying **Op** the operation to the subset of rows assigned to the respective core **CRi**. In addition to using parallelized across cores, also, at a single core, the operation **Op** may be performed concurrently on a number of blocks of one or more rows. In particular, a block may comprise multiple rows to perform the operation in a vectorized way. Thus, parallelization may be combined with vectorization and/or concurrency to achieve an efficient implementation of the operation **Opi**.

In this example, performing the operation may result in an output dataset 491-498 distributed across cores in the same way as the input dataset 481-488. More generally, multiple datasets that have the same number of rows, may be distributed across cores in the same way. Accordingly, for an operation having one or more input datasets and one or more output datasets, due to using the same distribution of rows to cores, corresponding rows of the datasets may be stored in the same memory portion **MPi** and may accordingly be processed efficiently at the core **CRi** corresponding to that memory portion.

The figure further shows an operation **DmaR**, 441, 442, 443, in which the input dataset 481-488 may be read from disk to memory using Direct Memory Access (DMA). As also discussed elsewhere, the blocks 481-488 of the dataset may be allocated according to the memory alignment restrictions for DMA, and interestingly, the distribution of rows across cores may also be determined to take into account DMA by using the DMA block size. The figure shows the DMA read operation **DmaR** being applied in parallel at the multiple cores, but it is also possible to perform the operation for the respective memory parts at a single core instead. Similarly, the figure shows an operation **DmaW**, 461, 462, 463, in which the output dataset 491-498 may be written from memory to disk using DMA. Also the DMA write operation may be applied at a single core or at multiple cores in parallel.

The use of DMA is optional: it is not needed to use DMA and/or to use a DMA block size to determine a distribution of rows across cores. In particular, it is possible to use DMA and/or a DMA block size only if the number of rows exceeds a given threshold value. The threshold value can be at most or at least 128, at most or at least 512, or at most or at least 2048, for example; or at most or at least 128 times the number of cores, at most or at least 512 times the number of cores, or at most or at least 2048 times the number of cores. This way, the performance advantages of DMA for large amounts of data can be combined with the advantage of having a more even spread of data and/or computation across cores for small amounts of data e.g. when applying a relatively expensive operation.

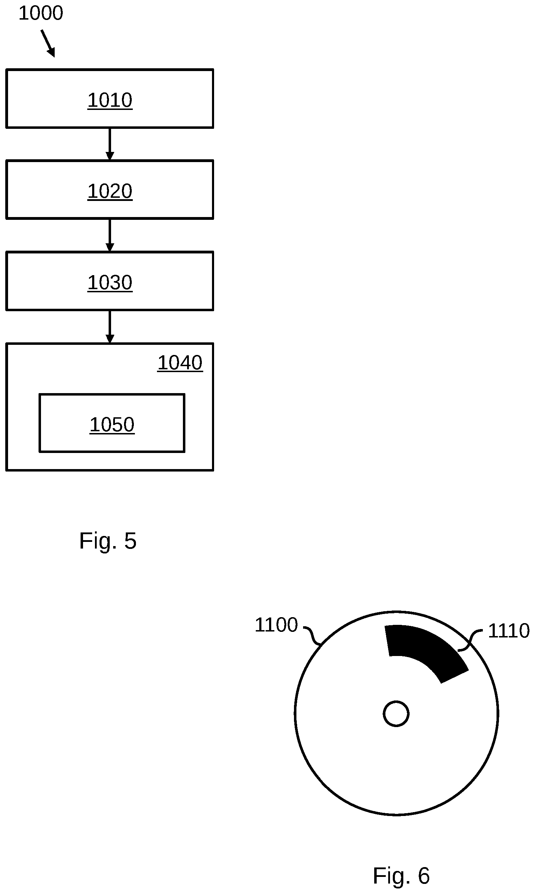

**Fig. 5** shows a block-diagram of a cryptographic method 1000 of performing a privacy-preserving computation. The privacy-preserving computation may be performed by a cryptographic device as a secure multi-party computation between multiple cryptographic devices comprising the cryptographic device. For example, the cryptographic device can be device 100 of Fig. 1. However, this is not a limitation, in that the method 1000 may also be performed using another system, apparatus or device. The method 1000 may further comprise the carrying out of the secure multi-party computation by the other cryptographic devices. For example, the method 1000 may be carried out by a cryptographic system, e.g., cryptographic system 010 of Fig. 2. The method 1000 may be computer-implemented.

The cryptographic method may comprise, in an operation titled "COMMUNICATE", communicating 1010 with at least one further cryptographic device of the multiple cryptographic devices.

The cryptographic method may comprise, in an operation titled "STORE", storing 1020 a dataset, wherein the dataset comprises multiple rows.

The cryptographic method may comprise, in an operation titled "DISTRIBUTE", distributing 1030 the dataset across multiple cores of a processor subsystem by assigning respective subsets of rows to the respective cores. The distribution may be determined from the number of rows.

The cryptographic method may comprise, in an operation titled "OPERATE", applying 1040 an operation of the cryptographic secure multi-party computation to the dataset in parallel. The applying 140 may comprise, in an operation titled "APPLY AT CORE", applying 1050 the operation to the subset of rows assigned to the respective core.

It will be appreciated that, in general, the operations of method 1000 of Fig. 5 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 6**, instructions for the computer, e.g., executable code, may be stored on a computer readable medium 1100, e.g., in the form of a series 1110 of machine-readable physical marks and/or as a series of elements having different electrical, e.g., magnetic, or optical properties or values. The medium 1100 may be transitory or non-transitory. Examples of computer readable mediums include memory devices, optical storage devices, integrated circuits, servers, online software, etc. Fig. 11 shows an optical disc 1100.

The instructions may be instructions for one or more particular devices of the cryptographic system. In particular, the instructions may comprise instructions for a cryptographic device to perform a multi-party computation as described herein.

Instead of or in addition to storing instructions, the computer readable medium may store a dataset for use in a cryptographic secure multi-party computation. For example, the medium may be transitory. The computer-readable storage medium may be divided into multiple respective memory parts for respective cores. The dataset may be distributed across the multiple cores by assigning respective subsets of rows to the respective cores. The distribution may be determined from the number of rows. The dataset may be obtained by allocating respective memory in the respective memory parts.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A cryptographic system (010) for performing a privacy-preserving computation on a dataset comprising multiple rows, wherein the cryptographic system comprises multiple cryptographic devices (221-223), wherein the multiple cryptographic devices are configured to perform the computation as a cryptographic secure multi-party computation between the multiple cryptographic devices, wherein a cryptographic device of the multiple cryptographic devices comprises a processor subsystem and a data interface, wherein:
- the data interface is configured for accessing the dataset;
- the processor subsystem comprises multiple cores;
- the processor subsystem is configured to apply an operation of the cryptographic secure multi-party computation to the dataset by:
- distributing the dataset across the multiple cores by assigning respective subsets of rows to the respective cores, wherein the distribution is determined from the number of rows;
- applying the operation of the cryptographic secure multi-party computation to the dataset in parallel comprising, at a respective core, applying the operation to the subset of rows assigned to the respective core.

2. The system (010) of claim 1, wherein the cryptographic device is configured to determine the distribution such that a core to which a largest subset of rows is assigned, depends on the number of rows.

3. The system (010) of claim 1 or 2, wherein the respective cryptographic devices are configured to determine the same distribution across cores from the number of rows without communication between the cryptographic devices.

4. The system (010) of any preceding claim, wherein the cryptographic device comprises a memory interface for accessing a memory, wherein the data is stored in the memory divided into multiple respective memory parts for the respective cores, and wherein the processor subsystem is configured to distribute the dataset by allocating respective memory for the respective subsets in the respective memory parts.

5. The system (010) of claim 4, wherein the memory of the cryptographic device comprises multiple respective NUMA domains for multiple respective sets of one or more cores, wherein a memory part for a core is comprised in a NUMA domain for the core.

6. The system (010) of claim 4 or 5, wherein the processor subsystem is configured to allocate the respective memory by allocating multiple respective chunks of contiguous memory in the respective memory part.

7. The system (010) of any one of claims 4-6, wherein the processor subsystem is configured to allocate respective memory for a respective subset of rows for use with DMA wherein the allocated memory is aligned such that a set of consecutive rows of the subset of rows can be read and/or written using DMA.

8. The system (010) of claim 6 or 7, wherein the processor subsystem is configured to allocate the memory for use with DMA upon determining that the number of rows exceeds a threshold value.

9. The system (010) of any preceding claim, wherein the processor subsystem is configured to apply the operation at the respective core by sending a message of the cryptographic secure multi-party computation to another cryptographic device independently of messages sent at other cores as part of applying the operation.

10. The system (010) of any preceding claim, wherein the processor subsystem is configured to apply the operation in multiple rounds of the cryptographic secure multi-party computation, wherein the multiple rounds are not synchronized across the multiple cores.

11. The system (010) of any preceding claim, wherein a row of the dataset is represented by multiple elementary values, and wherein the processor subsystem is configured to determine the distribution across cores independently of the number of elementary values per row.

12. The system (010) of any preceding claim, wherein processor subsystem is configured to determine the distribution by:
- determining a starting core based on the number of rows;
- determining a maximum number of rows per core based on the number of rows;
- assigning respective subsets of rows to respective cores according to the starting core and according to the maximum number of rows per core.

13. A cryptographic device (100, 221-223) for use in the cryptographic system (010) comprising multiple cryptographic devices according to any one of claims 1-12, wherein the cryptographic device is for performing a privacy-preserving computation as a cryptographic secure multi-party computation between the multiple cryptographic devices, wherein the cryptographic device comprises:
- a communication interface (180) configured for communication with at least one further cryptographic device of the cryptographic system;
- a memory interface (120) configured for accessing a dataset;
- a processor subsystem (140), wherein the processor subsystem comprises multiple cores and wherein the processor subsystem is configured to:
- distribute the dataset across the multiple cores by assigning respective subsets of rows to the respective cores, wherein the distribution is determined from the number of rows;
- apply an operation of the cryptographic secure multi-party computation to the dataset in parallel comprising, at a respective core, applying the operation to the subset of rows assigned to the respective core.

14. A cryptographic method (1000) of performing a privacy-preserving computation, wherein the privacy-preserving computation is performed by a cryptographic device as a secure multi-party computation between multiple cryptographic devices comprising the cryptographic device, wherein the method comprises:
- communicating (1010) with at least one further cryptographic device of the multiple cryptographic devices;
- accessing (1020) a dataset, wherein the dataset comprises multiple rows;
- distributing (1030) the dataset across multiple cores of a processor subsystem by assigning respective subsets of rows to the respective cores, wherein the distribution is determined from the number of rows;
- applying (1040) an operation of the cryptographic secure multi-party computation to the dataset in parallel comprising, at a respective core, applying (1050) the operation to the subset of rows assigned to the respective core.

15. A transitory or non-transitory computer-readable medium (1100) comprising data (1110) representing:
- instructions which, when executed by a processor system, cause the processor system to perform the cryptographic method of claim 14; and/or
- a dataset for use in a cryptographic secure multi-party computation, wherein the computer-readable storage medium is divided into multiple respective memory parts for respective cores, wherein the dataset is distributed across the multiple cores by assigning respective subsets of rows to the respective cores, wherein the distribution is determined from the number of rows; and wherein the dataset is obtained by allocating respective memory in the respective memory parts.
